# EUROPÄISCHE PATENTANMELDUNG

(11) **EP 3 792 713 A1**
(43) Veröffentlichungstag der Anmeldung: **17.03.2021**
(21) Anmeldenummer: 20182015.6
(22) Anmeldetag: 24.06.2020
(51) Int. Cl.: G05B 19/408, G05B 19/4097

(54) **VERFAHREN UND VORRICHTUNG ZUM ZUSCHNEIDEN VON BAULICHEN ELEMENTEN**

(30) Priorität: 13.09.2019 DE 102019214003
(71) Anmelder: Friesen, Alexander, 69427 Mudau (DE)
(72) Erfinder: Friesen, Alexander, 69427 Mudau (DE); Schwitin, Wladimir, 70619 Stuttgart (DE)
(74) Vertreter: Patent- und Rechtsanwälte Ullrich & Naumann

(57) **Zusammenfassung**

Ein Verfahren dient zum Zuschneiden von baulichen Elementen, die zu einem die Elemente umfassenden Gebilde komplettiert werden, insbesondere zum Zuschneiden von Dachziegeln, Fliesen, Pflastersteinen, etc., mit folgenden Verfahrensschritten: virtuelles Zuschneiden der Elemente unter Zugrundelegung der Geometrie und Maße des durch die Elemente zu komplettierenden Gebildes und eines Komplettierungsplans, der die korrekte Anordnung der zugeschnittenen Elemente im Gebilde, d.h. die Verlegeordnung, definiert, wobei das virtuelle Zuschneiden vorzugsweise mittels Computer-Programm bzw. Computer-Software, beispielsweise mittels CAD-Programm, erfolgt. Danach erfolgt die Ermittlung bzw. Berechnung der Daten eines jeden zugeschnittenen Elements, Übermittlung der so gewonnenen Daten der einzelnen Elemente an eine prozessgesteuerte Schneidmaschine mit Schneidwerkzeug, Positionierung der einzelnen, noch nicht zugeschnittenen Elemente in einer vorgegebenen Position im Zuschnittbereich der Schneidmaschine, individuelles Zuschneiden der einzelnen Elemente und Entnahme nach dem Zuschnitt, und ggf. Markierung der zugeschnittenen Elemente nach der Verlegeordnung.

## Beschreibung

Die Erfindung betrifft ein Verfahren zum Zuschneiden von baulichen Elementen, die zu einem die Elemente umfassenden Gebilde komplettiert werden, insbesondere zum Zuschneiden von Dachziegeln, Fliesen, Pflastersteinen. Des Weiteren betrifft die Erfindung eine entsprechende Vorrichtung, die zur Anwendung des Verfahrens geeignet ist.

Es geht hier um das Zuschneiden baulicher Elemente, wobei der Begriff "bauliches Element" im weitesten Sinne zu verstehen ist. Letztendlich geht es dabei um solche Elemente, die sich zu einem die Elemente umfassenden Gebilde komplettieren lassen. Das eingedeckte Dach ist ein Beispiel eines solchen Gebildes, welches aus einzelnen Dachziegeln als bauliche Elemente besteht. Der Einfachheit halber sei nachfolgend auf Dachziegel als besondere bauliche Elemente Bezug genommen.

Häufig besteht der Bedarf, dass Dachziegel passgenau zurechtgeschnitten werden. Dies ist beispielsweise bei einem Zelt- oder Pyramidendach der Fall.

Grundsätzlich ist es möglich, dass die einzelnen Dachziegel beispielsweise mit der Flex direkt am bzw. auf dem Dach geschnitten werden. Dies birgt ein hohes Risiko für den Handwerker in sich, zumal Dachziegel ausschließlich auf sicheren Standflächen geschnitten werden sollen. Außerdem entsteht beim Schneiden mit der Flex ein feiner Ziegelstaub, der gesundheitsschädlich ist.

Mittlerweile gibt es Vorschriften über sichere Standflächen beim Schneiden (wobei das Dach keine sichere Standfläche ist) und begrenzte Staubemission.

Konventionell werden die Dachziegel direkt auf dem Dach mit einem Wachsstift entsprechend dem Zuschnittbedarf markiert und dann nach unten zu einer sicheren Standfläche verbracht. Die Dachziegel werden dann mit einer Steinsäge oder Flex an den angezeichneten Linien geschnitten. Eine Kantenbearbeitung der Ziegel kann sattfinden. Anschließend werden die Ziegel dann wieder auf das Dach verbracht und können, im geschnittenen Zustand, verlegt werden. Dies ist mühsam und zeitintensiv.

Außerdem ist beim händischen Zuschneiden der Dachziegel nachteilig, dass das Schneidergebnis, aufgrund der händischen Vorgehensweise nach Augenmaß, nicht reproduzierbar ist. Entsprechend dem Augenmaß des Handwerkers und seiner handwerklichen Kunst werden die Dachziegel mal genauer und mal weniger genau geschnitten, was sich auf das Gesamtgebilde, in diesem Fall auf die Verlegequalität des Dachs, auswirkt.

Der vorliegenden Erfindung liegt daher die Aufgabe zugrunde, ein Verfahren zum Zuschneiden von baulichen Elementen, insbesondere zum Zuschneiden von Dachziegeln, anzugeben, welches sich bei hoher Passgenauigkeit sicher und ohne Mühe anwenden lässt. Außerdem soll eine Vorrichtung angegeben werden, die sich zur Anwendung des erfindungsgemäßen Verfahrens eignet.

Erfindungsgemäß umfasst das Verfahren folgende Verfahrensschritte:
Virtuelles Verlegen und Zuschneiden der Elemente unter Zugrundelegung der Geometrie und Maße des durch die Elemente zu komplettierenden Gebildes und eines Komplettierungsplans bzw. einer Verlegeanleitung des Herstellers, der die korrekte Anordnung der zugeschnittenen Elemente im Gebilde, d.h. eine Verlegeanordnung, definiert, wobei das virtuelle Verlegen und Zuschneiden vorzugsweise mittels Computer-Programm erfolgt,
Ermittlung bzw. Berechnung der Daten eines jeden zugeschnittenen Elements, Übermittlung der so gewonnenen Daten der einzelnen Elemente an eine prozessgesteuerte Schneidmaschine mit Schneidwerkzeug,
Positionierung der einzelnen, noch nicht zugeschnittenen Elemente in einer vorgegebenen Position im Zuschnittbereich der Schneidmaschine,
individuelles Zuschneiden der einzelnen Elemente und Entnahme nach dem Zuschnitt, und
ggf. Markierung der zugeschnittenen Elemente nach der Verlegeanordnung.

Dabei ist wesentlich, dass das Verfahren von zwei unterschiedlichen Grundvoraussetzungen ausgeht. Zum einen ist es denkbar, dass die Maße des zu deckenden Dachs vor Ort aufgenommen werden. Zum anderen können die Maße aus einem Plan stammen, der bzw. dessen Daten dem Verfahren zugrunde gelegt wird.

Ungeachtet der Frage, woher die Daten für das zu komplettierende Gebilde - in diesem Falle Dach - stammen, erfolgt nach dem erfindungsgemäßen Verfahren ein virtuelles Zuschneiden der Elemente, in diesem Falle der Dachziegel, unter Zugrundelegung der Geometrie und der Maße des durch die Elemente zu komplettierenden Gebildes und eines Komplettierungsplans, der die korrekte Anordnung der zugeschnittenen Elemente im Gebilde bzw. Dach, d.h. den Verlegeplan, definiert. Das virtuelle Zuschneiden erfolgt vorzugsweise unter Nutzung eines Computer-Programms.

Das Computer-Programm nutzt entweder vor Ort genommene Maße oder Maße aus einem Bauplan, wobei die Geometrie und Maße, ungeachtet Ihrer Herkunft, unter Berücksichtigung der grundsätzlichen Maße der Elemente zu dem Gebilde komplettiert werden. Ein Komplettierungsplan bzw. Einbauanleitung des Herstellers der Bauteile wird hier zugrunde gelegt. Es findet eine korrekte Anordnung der zugeschnittenen Elemente im Gebilde statt, woraus sich ein eindeutige Verlegeanordnung ergibt.

Wie bereits zuvor ausgeführt, erfolgt das virtuelle Zuschneiden und die Ermittlung der Verlegeanordnung mittels Computer-Programm, wobei dies auf einem herkömmlichen Computer laufen kann. Auch ist es denkbar, dass das Programm in Form einer App auf einem Organizer läuft. Dieser Organizer oder auch ein Notebook oder Laptop können kabelgebunden oder kabellos mit einer Schneidmaschine verbunden sein, um eine Datenübertragung zu bewerkstelligen. Unter Zugrundelegung der Möglichkeit einer solchen Datenübertragung werden die ermittelten bzw. berechneten virtuell eines jeden zugeschnittenen Elements/Dachziegels an die prozessgesteuerte Schneidmaschine übermittelt, die mit einem Schneidwerkzeug ausgestattet ist. Dabei kann es sich beispielsweise um eine herkömmliche oder angepasste Flex handeln.

Unter Zugrundelegung der für den Zuschnitt erforderlichen Daten wird das einzelne, noch nicht zugeschnittene Element bzw. der jeweilige Dachziegel in einer vorgegebenen Position im Zuschnittbereich der Schneidmaschine positioniert. Die Positionierung des jeweiligen Elements ist absolut reproduzierbar und orientiert sich an einem Fixpunkt des Elements. Dieser Fixpunkt wird bei Digitalisierung des zu verbauenden Werkstücks für das Computer-Programm aus Geometrie dessen berechnet (in der Regel ist es die geometrische Mitte). Bei komplexen, unsymmetrischen Formen, die diese Berechnung erschweren, kann dieser Fixpunkt vom Planer nach eigenem Ermessen dem virtuellen Werkstück hinzugefügt werden und wird ein Bestandsteil dessen.

Es findet ein individuelles Zuschneiden des einzelnen Elements bzw. des einzelnen Ziegels statt. Nach dem Zuschnitt wird der Ziegel entnommen und ggf. markiert, vorzugsweise entsprechend der ermittelten Verlegeanordnung, so dass nach dem Transport der zugeschnittenen Ziegel auf das Dach ein Verlegen nach der Verlegeanordnung mühelos und verwechslungsfrei möglich ist.

Für das erfindungsgemäße Verfahren ist wesentlich und von besonderem Vorteil, dass das jeweilige Element vor dem Zuschneiden in der Schneidmaschine reproduzierbar positioniert wird, wobei zu Positionierung des Elements ein Abstand vom Fixpunkt des Elements bis zur Schnittlinie ermittelt wird.

Die Geometrie und Maße des die Elemente umfassenden Gebilde kann entsprechend den voranstehenden Ausführungen entweder aus einem Plan vorgegeben werden oder vor Ort gemessen bzw. ermittelt werden. Die Daten sind entweder bereits im Rechner enthalten oder werden dem Rechner und somit dem Programm zugeführt. Dies kann beispielsweise händisch erfolgen.

Die Geometrie und Maße des Gebildes werden einem Koordinatensystem zugeführt und/oder spannen ein Koordinatensystem auf. Das zu bearbeitende Element, in diesem Falle der Dachziegel, wird rechnerisch in das Koordinatensystem eingebunden. Zu jedem Element werde der Abstand der Schnittlinie zu dem Fixpunkt und der Schnittwinkel berechnet. Diese Daten werden an die Schneidmaschine zur Steuerung des Werkzeugs übermittelt. Letztendlich verfügt die Schneidmaschine entweder über einen Prozessrechner oder wird mit einem Prozessrechner wirkverbunden. Jedenfalls erfolgt eine Steuerung der Schneidmaschine aufgrund der berechneten Daten.

Wie bereits zuvor ausgeführt, verfügt die Schneidmaschine über ein Schneidwerkzeug, der für das zu bearbeitende Material eignet, wobei es sich dabei um eine konventionelle Flex handeln kann. Entsprechend der Ausgestaltung des Schneidwerkzeugs ist die Definition eines Zuschnittbereichs erforderlich, der in vorteilhafter Weise auf einem Drehtisch definiert ist.

Das zu schneidende Element wird derart auf dem Drehtisch positioniert und ggf. gehalten oder eingespannt, dass der Fixpunkt des Elements mit der Drehachse des Drehtischs übereinstimmt. Auch ist es denkbar, andere Positionierungshilfen zu nutzen, wobei die Positionierung reproduzierbar sein muss.

Zur sicheren Positionierung wird das zu schneidende Element bzw. wird der Dachziegel mittels Schablone, Lehre, etc. auf dem Drehtisch positioniert und dort gehalten oder verspannt.

Nach der Positionierung des Elements auf dem Drehtisch wird der Schnittwinkel durch Drehen des Drehtischs entsprechend der Vorgabe aus dem Programm eingestellt. Aufgrund der zuvor erörterten Positionierung des Elements ist die Einstellung des Schnittwinkels reproduzierbar.

Des Weiteren wird das zu schneidende Element mittels einer den Drehtisch tragenden Lineareinheit entsprechend dem berechneten Abstand Schnittlinie-Fixpunkt relativ zum Schneidewerkzeug gemeinsam mit dem Drehtisch verfahren. Andere Möglichkeit ist, den Drehtisch unverschiebbar auf dem Grundgestell zu montieren und das Schneidewerkzeug relativ zu Drehachse zu verfahren. In diesem Fall muss die Linearachse das Werkzeug, anstatt den Drehtisch, bewegen.

Die Variante mit beweglichen Schneidewerkzeug ist platzsparend, weil alle Bewegungen innerhalb des Grundgestells durchgeführt werden und, obwohl komplizierter zu realisieren, bei Einsatz in einer Werkstatt, wo Raum oft begrenzt ist, kann interessant werden.

Entsprechend der zuvor definierten Schnittlinie und des Schnittwinkels, lässt sich der Schnitt durch das Element reproduzierbar, entsprechend der berechneten Vorgabe, durchführen.

Das Schneidwerkzeug schneidet über einen definierten Schneidweg hinweg relativ zur Drehachse entlang der Schnittlinie. Dabei ist wesentlich, dass das Schneidwerkzeug durch manuelles Verfahren entlang einer Zwangsführung bewegt werden kann. Auch ist es denkbar, dass das Schneidwerkzeug automatisch arbeitet, so dass ein händisches Verfahren nicht erforderlich ist.

Die eingangs genannte Aufgabe ist in Bezug auf die erfindungsgemäße Vorrichtung durch die Merkmale des nebengeordneten Anspruchs 20 gelöst, wonach die Vorrichtung einen ein Programm aufweisenden Computer zum virtuellen Zuschneiden der Elemente unter Zugrundelegung der Geometrie und Maße des durch die Elemente zu komplettierenden Gebildes und eines Komplettierungsplans, umfasst. Der Komplettierungsplan bzw. Verlegeanleitung definiert die korrekte Anordnung der zugeschnittenen Elemente im Gebilde, d.h. die Verlegeanordnung.

Als Computer kann ein Organizer mit einer App als CAD-Programm nutzbar sein, wobei beliebige Prozessoren, Speicher und Datenträger Anwendung finden können, insbesondere handelsübliche EDV-Hardware. Die Daten eines jeden virtuell zugeschnittenen Elements werden ermittelt bzw. berechnet. Mit einer prozessgesteuerten Schneidmaschine mit Werkzeug werden die so gewonnenen Daten der einzelnen Elemente übermittelt.

Die Schneidmaschine weist einen Zuschnittbereich auf, in dem die einzelnen, noch nicht zugeschnittenen Elemente in einer vorgegebenen Position positioniert, individuell zugeschnitten und nach dem Zuschnitt entnommen und ggf. nach der Verlegeanordnung markiert werden. Danach erfolgt die Verlegung vor Ort.

Die Schneidmaschine hat ein Grundgestell und eine darauf angeordnete Lineareinheit, auf der ein Drehtisch angeordnet ist. Der Zuschnittbereich der Schneidmaschine ist auf dem Drehtisch definiert. Das zu schneidende Element wird derart auf dem Drehtisch positioniert und ggf. gehalten oder eingespannt, dass der Fixpunkt des Elements mit der Drehachse des Drehtischs übereinstimmt.

Auf dem Drehtisch ist eine vorzugsweise verstellbare Schablone angeordnet, wobei das zu schneidende Element mittels der Schablone auf dem Drehtisch positioniert und gehalten wird. Nach Positionierung des Elements auf dem Drehtisch wird der Schnittwinkel durch Drehen des Drehtischs entsprechend der Vorgabe aus dem Programm eingestellt.

Die den Drehtisch tragende Lineareinheit verfährt das zu schneidende Element gemeinsam mit dem Drehtisch entsprechend der berechneten Schnittlinie relativ zum Schneidwerkzeug, oder, bei unverschiebbar montiertem Drehtisch, wird das Schneidewerkzeug relativ zu Drehachse verfahren, wobei das Schneidwerkzeug über einen definierten Schneidweg hinweg relativ zur Drehachse entlang der Schnittlinie schneidet.

Bei dem Schneidwerkzeug handelt es sich um einen Winkelschleifer, eine Flex oder dergleichen, entsprechend dem konkreten Bedarf, d.h. entsprechend dem konkreten Element. Beim Schneiden von Dachziegeln ist die grundsätzliche Anwendung einer Flex im Sinne eines Schneidwerkzeugs möglich.

Des Weiteren ist es von Vorteil, wenn der Schneidmaschine eine Absaugeinrichtung zugeordnet ist, insbesondere dann, wenn das Element trocken geschnitten wird. Dies ist bei Dachziegeln grundsätzlich möglich. Die Vorkehrung einer Absaugeinrichtung, insbesondere im Zuschnittbereich, vermeidet eine Verschmutzung bzw. Kontamination der Umgebung und erleichtert das Arbeiten mit der erfindungsgemäßen Vorrichtung.

Außerdem ist es grade beim Arbeiten vor Ort von Vorteil, wenn die Schneidmaschine einer mobilen, vorzugsweise fahrbaren Einheit zugeordnet ist. So kann die Schneidmaschine einem Anhänger oder einem klassischen Handwerkerfahrzeug, beispielsweise einem kleinen Bus, zugeordnet sein. Eine optimale Flexibilität ist dadurch gewährleistet.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines Ausführungsbeispiels der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht den grundsätzlichen Aufbau einer erfindungsgemäßen Vorrichtung,
- Fig. 2: in einer schematischen Vorderansicht den grundsätzlichen Aufbau der Vorrichtung aus Fig. 1,
- Fig. 3: in einer schematischen Draufsicht den grundsätzlichen Aufbau der Vorrichtung aus den Fig. 1 und 2,
- Fig. 4: in schematischen Ansichten die Vorgabe eines Fixpunkts des Werkstücks und
- Fig. 5: in einer schematischen Ansicht die Abfolge zu schneidender Dachziegel, je Ziegelreihe und unter Berücksichtigung des gleichen Schnittwinkels, der erfindungsgemäß berechnet worden ist.

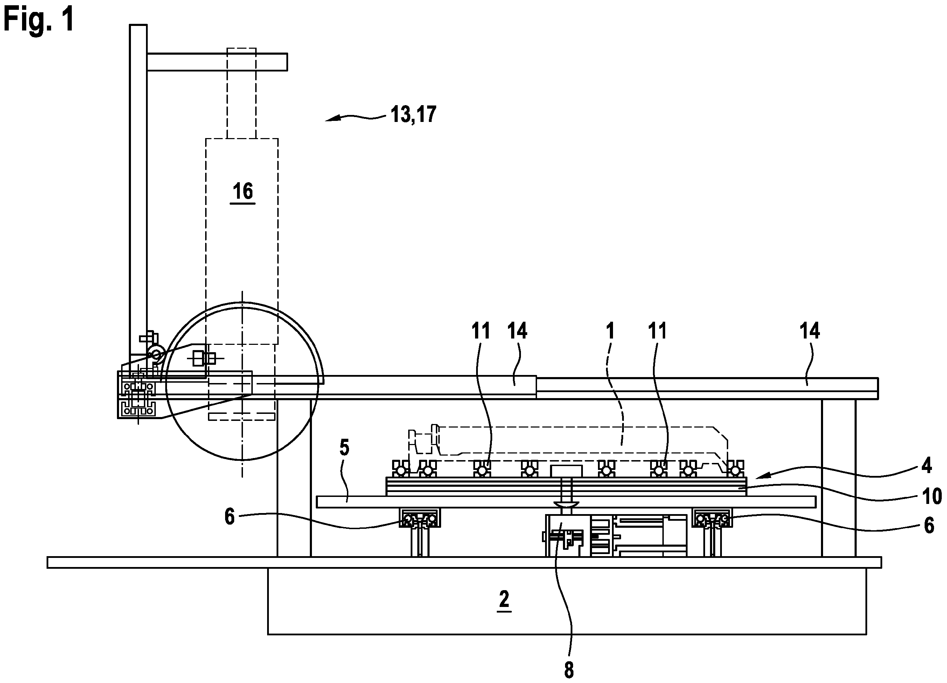

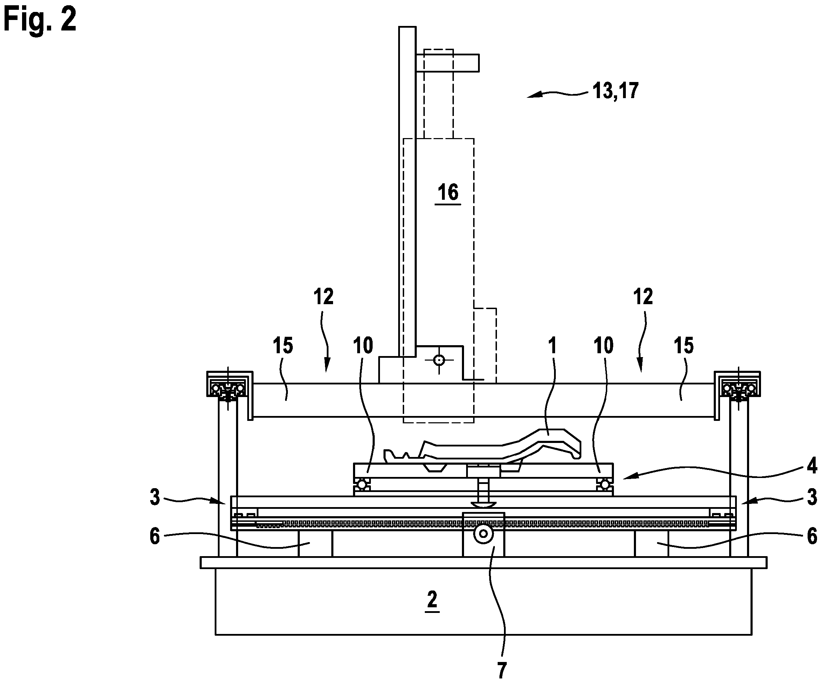

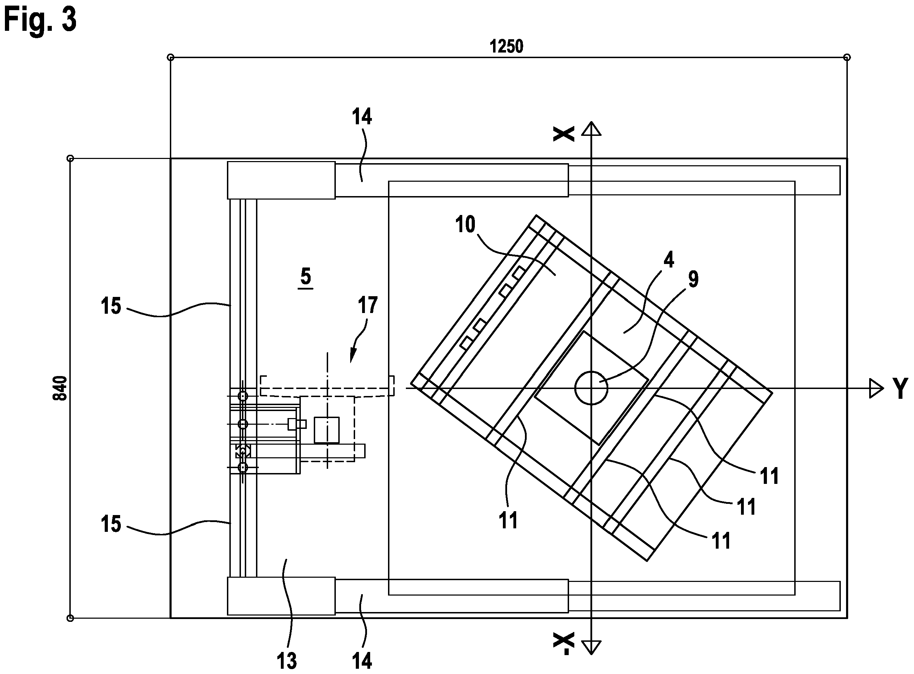

Die Fig. 1 bis Fig. 3 zeigen ein Ausführungsbeispiel einer erfindungsgemäßen Vorrichtung, hier zum Zuschneiden von Dachziegeln 1. Der Dachziegel 1 ist in den Fig. 1 und 2 angedeutet.

Die Vorrichtung umfasst ein Grundgestell 2, welches in den Fig. lediglich angedeutet ist. Dabei kann es sich um einen maschinenbaulichen Rahmen, einen Werkzeugträger, etc. handeln.

Das Grundgestell 2 ist derart ausgelegt, dass darauf eine Lineareinheit 3 angeordnet ist, auf der wiederum ein zentraler Drehtisch 4 befestigt ist. Die Lineareinheit 3 trägt somit den Drehtisch 4, der wiederum zur Aufnahme des Dachziegels 1 dient.

Die Lineareinheit 3 umfasst eine Tischplatte 5, Führungsschienen 6 und eine Auslegeachse 7, wobei die Lineareinheit durch einen Schrittmotor 8 angetrieben ist. Über die Lineareinheit 3 wird der Drehtisch 4 über das Grundgestell 2 hinweg linear verfahren.

Der auf der Lineareinheit 3 angeordnete Drehtisch 4 ist über eine Drehachse 9 drehbar mit der Lineareinheit 3 bzw. der dortigen Tischplatte 5 verbunden.

Der Drehtisch 4 weist eine Arbeitsplatte 10 auf, auf der eine verstellbare Schablone 11 zur Aufnahme und Fixierung des Werkstücks bzw. Elements, in diesem Falle des Dachziegels 1, vorgesehen ist.

Auf dem Grundgestell 2 ist ein Obergurt 12 zur Aufnahme und Führung des Werkzeugs 13 angeordnet. Der Obergurt 12 besteht aus Führungsschienen 14, aus einer sich zwischen den Führungsschienen 14 erstreckenden Traverse 15 und einer Konsole 16 zum Befestigen des Schneidwerkzeugs 17. Das Schneidwerkzeug 17 ist austauschbar und kein fester Bestandteil der Vorrichtung. Es kann sich dabei um einen handelsüblichen Winkelschleifer, eine Flex, etc. handeln.

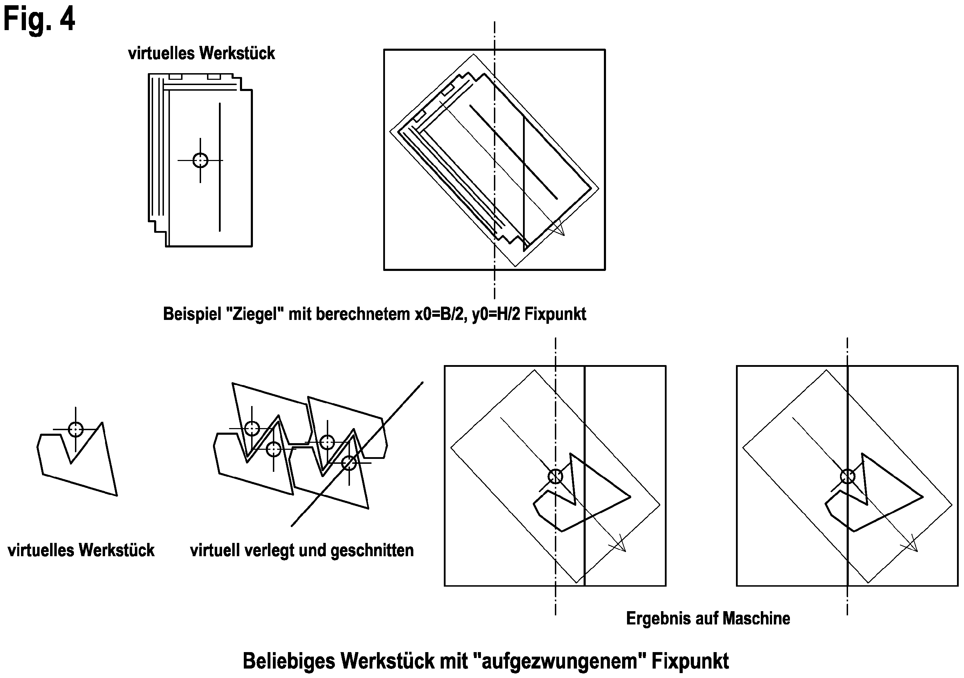

Fig. 4 zeigt sowohl am Beispiel von Dachziegeln als auch am Beispiel eines beliebigen Werkstücks die Vorgabe eines Fixpunkts, der entweder berechnet wird oder dem Werkstück mehr oder weniger nach Belieben des Planers zugeordnet wird. Ausgehend von diesem Fixpunkt wird ein lokales Koordinatensystem des Werkstücks definiert, wonach die Lage der Schnittlinie vom globalen System des Gebildes in das lokale System des Werkstücks umgerechnet wird. Die konkrete Geometrie des Werkstücks ist dabei nicht relevant. Es geht ausschließlich um den Abstand zwischen dem Fixpunkt und der Schnittlinie sowie um den Schnittwinkel, wie dies in den einzelnen Abbildungen von Fig. 4 dargestellt ist.

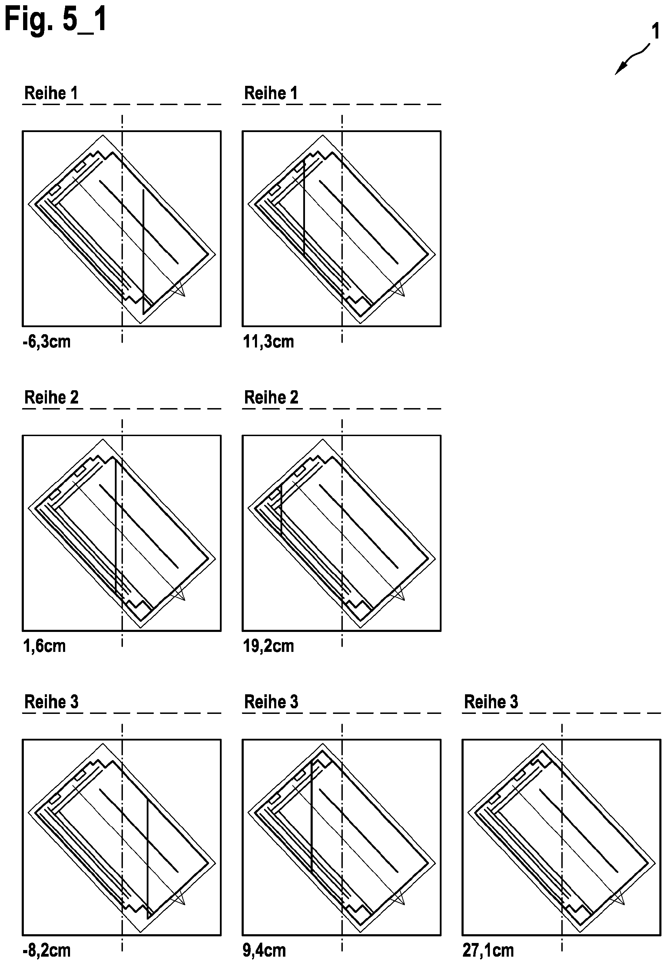

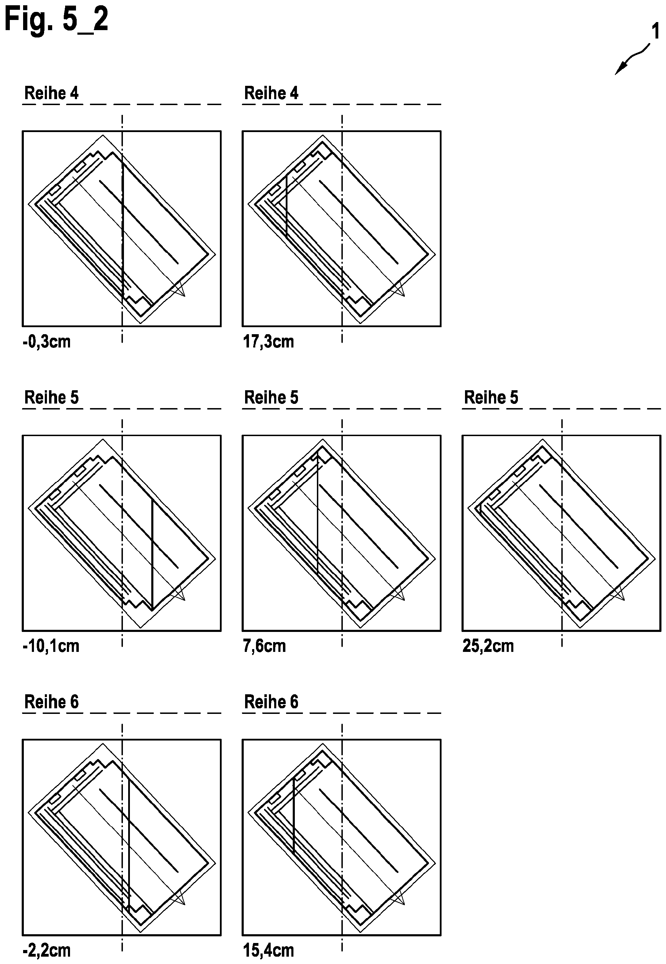

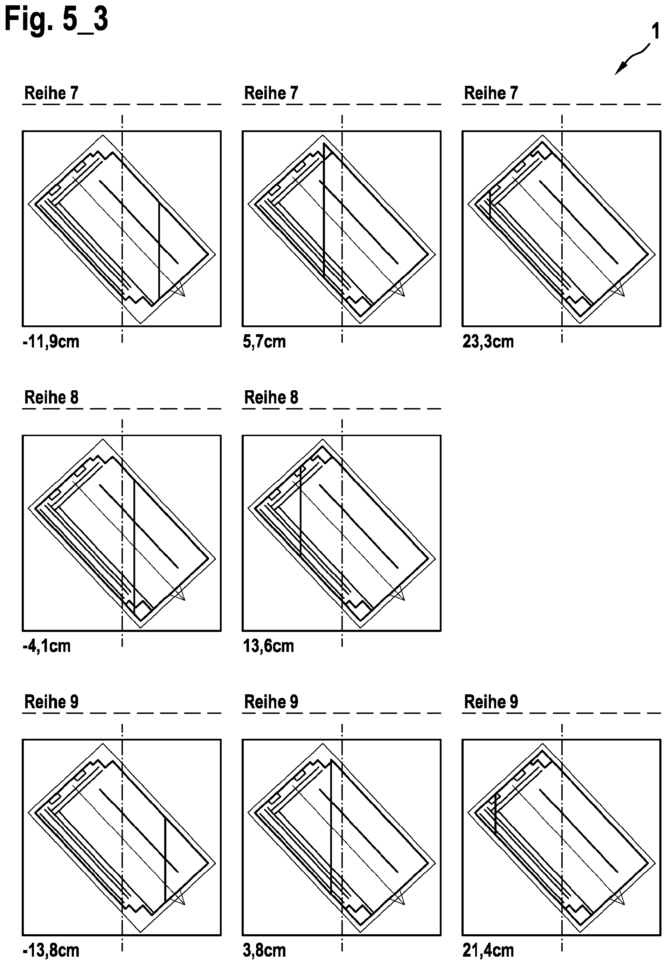

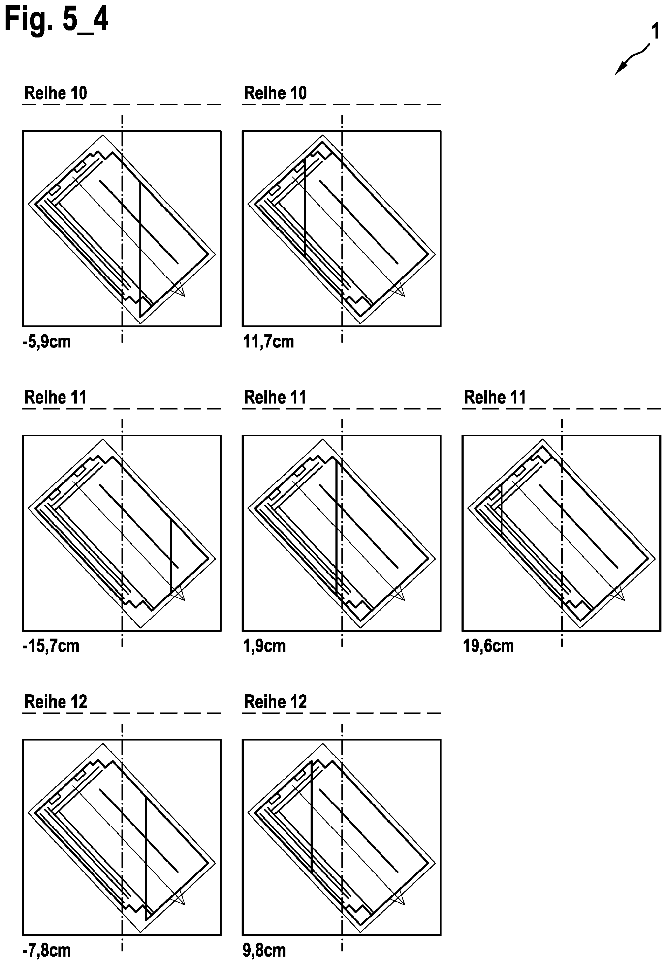

Schließlich zeigt Fig. 5 den beispielhaften Zuschnitt der Dachziegel 1 eines zu deckenden Daches, mit insgesamt 29 Dachziegeln 1 und einem Schnittwinkel von 43,03°, jeweils mit Angabe der Position der Schnittlinie, von der Mitte her gerechnet. Diese Darstellung soll verdeutlichen, wie präzise nach dem erfindungsgemäße Verfahren mit der erfindungsgemäßen Vorrichtung gearbeitet werden kann, wobei die Bearbeitung absolut reproduzierbar ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dienen, diese jedoch nicht auf das Ausführungsbeispiel einschränkt.

### Bezugszeichenliste

- 1: Dachziegel
- 2: Grundgestell
- 3: Lineareinheit
- 4: Drehtisch
- 5: Tischplatte
- 6: Führungsschiene
- 7: Auslegeachse
- 8: Schrittmotor
- 9: Drehachse
- 10: Arbeitsplatte
- 11: Schablone
- 12: Obergurt
- 13: Werkzeug
- 14: Führungsschiene
- 15: Traverse
- 16: Konsole
- 17: Schneidwerkzeug

## Patentansprüche

1. Verfahren zum Zuschneiden von baulichen Elementen, die zu einem die Elemente umfassenden Gebilde komplettiert werden, insbesondere zum Zuschneiden von Dachziegeln, Fliesen, Pflastersteinen, etc., mit folgenden Verfahrensschritten:
virtuelles Zuschneiden der Elemente unter Zugrundelegung der Geometrie und Maße des durch die Elemente zu komplettierenden Gebildes und eines Komplettierungsplans bzw. einer Verlegeanleitung, der die korrekte Anordnung der zugeschnittenen Elemente im Gebilde, d.h. die Verlegeordnung, definiert, wobei das virtuelle Zuschneiden vorzugsweise mittels Computer-Programm bzw. Computer-Software, beispielsweise mittels CAD-Programm, erfolgt,
Ermittlung bzw. Berechnung der Daten eines jeden zugeschnittenen Elements, Übermittlung der so gewonnenen Daten der einzelnen Elemente an eine prozessgesteuerte Schneidmaschine mit Schneidwerkzeug,
Positionierung der einzelnen, noch nicht zugeschnittenen Elemente in einer vorgegebenen Position im Zuschnittbereich der Schneidmaschine,
individuelles Zuschneiden der einzelnen Elemente und Entnahme nach dem Zuschnitt, und
ggf. Markierung der zugeschnittenen Elemente nach der Verlegeordnung.

2. Verfahren nach Anspruch 1, **dadurch gekennzeichnet, dass** das Element vor dem Zuschneiden in der Schneidmaschine reproduzierbar positioniert wird, wobei zur Positionierung des Elements ein Abstand von einem Fixpunkt des Elements bis zur Schnittlinie ermittelt oder vorgegeben wird, wobei der Fixpunkt ein lokales Koordinatensystem des Werkstücks definieren kann und wobei nach Festlegen eines globalen Koordinatensystems für das Gebilde die Lage der Schnittlinie vom globalen Koordinatensystem in das lokale Koordinatensystem des Werkstücks umgerechnet werden kann.

3. Verfahren nach Anspruch 1 oder 2, **dadurch gekennzeichnet, dass** die Geometrie und Maße des die Elemente umfassenden Gebildes aus einem Plan vorgegeben werden, oder dass die Geometrie und Maße des Gebildes vor Ort gemessen und dem Programm zugeführt werden, wobei die Geometrie und Maße des Gebildes einem Koordinatensystem zugeführt werden und/oder ein Koordinatensystem aufspannen können und wobei ggf. das zu bearbeitende Element rechnerisch in das Koordinatensystem eingebunden werden kann.

4. Verfahren nach einem der Ansprüche 1 bis 3, **dadurch gekennzeichnet, dass** zu jedem Element der Abstand einer Schnittlinie zu einem Fixpunkt des Elements und der Schnittwinkel berechnet oder vorgegeben und an die Schneidmaschine zur Steuerung des Werkzeugs übermittelt wird.

5. Verfahren nach einem der Ansprüche 1 bis 4, **dadurch gekennzeichnet, dass** der Zuschnittbereich der Schneidmaschine auf einem Drehtisch definiert ist, wobei das zu schneidende Element derart auf dem Drehtisch positioniert und ggf. gehalten oder eingespannt wird, dass der Fixpunkt des Elements mit der Drehachse des Drehtischs übereinstimmt, wobei das zu schneidende Element mittels Schablone auf dem Drehtisch positioniert und gehalten werden kann.

6. Verfahren nach Anspruch 5, **dadurch gekennzeichnet, dass** nach Positionierung des Elements auf dem Drehtisch der Schnittwinkel durch Drehen des Drehtischs entsprechend der Vorgabe aus dem Programm eingestellt werden kann, wobei das zu schneidende Element mittels einer den Drehtisch tragenden Lineareinheit entsprechend der berechneten Schnittlinie relativ zum Schneidwerkzeug mit dem Drehtisch verfahren werden kann.

7. Verfahren nach Anspruch 5 oder 6, **dadurch gekennzeichnet, dass** das Schneidwerkzeug bei unverschiebbar montiertem Drehtisch mittels einer das Werkzeug tragenden Lineareinheit entsprechend der berechneten Schnittlinie relativ zur Drehachse des Tischs verfahren werden kann, wobei das Schneidwerkzeug über einen definierten Schneidweg hinweg relativ zur Drehachse entlang der Schnittlinie schneiden kann und wobei das Schneidwerkzeug manuell entlang einer Zwangsführung bewegt werden kann.

8. Verfahren nach einem der Ansprüche 1 bis 7, **dadurch gekennzeichnet, dass** das Schneidwerkzeug automatisch entlang einer Zwangsführung bewegt wird.

9. Vorrichtung zum Zuschneiden von baulichen Elementen, die zu einem die Elemente umfassenden Gebilde komplettiert werden, insbesondere zum Zuschneiden von Dachziegeln, Fliesen, Pflastersteinen, etc.,
mit einem ein Computer-Programm bzw. -Software aufweisenden Computer zum virtuellen Zuschneiden der Elemente unter Zugrundelegung der Geometrie und Maße des durch die Elemente zu komplettierenden Gebildes und ggf. eines Komplettierungsplans bzw. Verlegeanleitung, der die korrekte Anordnung der zugeschnittenen Elemente im Gebilde, d.h. eine Verlegeordnung, definiert,
wobei als Computer ein Organizer mit einer App als Computer-Programm, beispielsweise als CAD-Programm nutzbar ist,
und wobei die Daten eines jeden virtuell zugeschnittenen Elements ermittelt bzw. berechnet werden,
und mit einer prozessgesteuerten Schneidmaschine mit Schneidwerkzeug, an die die so gewonnenen Daten der einzelnen Elemente an eine übermittelt werden,
wobei die Schneidmaschine einen Zuschnittbereich aufweist in dem die einzelnen, noch nicht zugeschnittenen Elemente in einer vorgegebenen Position positioniert, individuell zugeschnitten, nach dem Zuschnitt entnommen und ggf. nach dem Verlegeplan markiert werden.

10. Vorrichtung nach Anspruch 9, **dadurch gekennzeichnet, dass** die Schneidmaschine ein Grundgestell und eine darauf angeordnete Lineareinheit aufweist, auf der ein linear verfahrbarer Drehtisch angeordnet ist, wobei der Zuschnittbereich der Schneidmaschine auf dem Drehtisch definiert ist und wobei das zu schneidende Element derart auf dem Drehtisch positioniert und ggf. gehalten oder eingespannt wird, dass der Fixpunkt des Elements mit der Drehachse des Drehtischs übereinstimmt, oder dass die Schneidmaschine ein Grundgestell und eine darauf angeordnete Lineareinheit aufweist, auf der ein Schneidewekzeug angeordnet ist, wobei der Zuschnittbereich der Schneidmaschine auf dem Drehtisch definiert ist und wobei das zu schneidende Element derart auf dem Drehtisch positioniert und ggf. gehalten oder eingespannt wird, dass der Fixpunkt des Elements mit der Drehachse des Drehtischs übereinstimmt.

11. Vorrichtung nach Anspruch 10, **dadurch gekennzeichnet, dass** auf dem Drehtisch eine vorzugsweise verstellbare Schablone angeordnet ist, wobei das zu schneidende Element mittels der Schablone auf dem Drehtisch positioniert und gehalten wird und wobei nach Positionierung des Elements auf dem Drehtisch der Schnittwinkel durch Drehen des Drehtischs entsprechend der Vorgabe aus dem Programm eingestellt wird.

12. Vorrichtung nach Anspruch 10, **dadurch gekennzeichnet, dass** die den Drehtisch tragende Lineareinheit das zu schneidende Element entsprechend der berechneten Schnittlinie relativ zum Schneidewerkzeug mit dem Drehtisch verfährt, wobei das Schneidwerkzeug über einen definierten Schneidweg hinweg relativ zur Drehachse entlang der Schnittlinie schneidet.

13. Vorrichtung nach Anspruch 10 oder 11, **dadurch gekennzeichnet, dass** die das Schneidewerkzeug tragende Lineareinheit das Werkzeug entsprechend der berechneten Schnittlinie relativ zur Drehachse des Drehtischs verfährt, wobei das Schneidwerkzeug über einen definierten Schneidweg hinweg relativ zur Drehachse entlang der Schnittlinie schneidet.

14. Vorrichtung nach einem der Ansprüche 9 bis 13, **dadurch gekennzeichnet, dass** es sich bei dem Schneidwerkzeug um ein wechselbares Werkzeug handelt, das sich für das zu bearbeitende Material eignet, beispielsweise ein Winkelschleifer, eine Flex, eine Säge, etc.

15. Vorrichtung nach einem der Ansprüche 9 bis 14, **dadurch gekennzeichnet, dass** der Schneidmaschine, insbesondere dem Zuschnittbereich, eine Absaugeinrichtung zugeordnet ist und/oder dass die Schneidmaschine einer mobilen, vorzugsweise fahrbaren Einheit zugeordnet ist.
